# EUROPEAN PATENT APPLICATION

(11) **EP 1 795 794 A1**
(43) Date of publication of application: **13.06.2007**
(21) Application number: 05765512.8
(22) Date of filing: 05.07.2005
(51) Int. Cl.: F16L 13/00, B01D 63/00, B01D 69/04, B01D 71/02

(54) **TUBE END CONNECTION BODY**

(30) Priority: 27.09.2004 JP 2004278739
(71) Applicant: Bussan Nanotech Research Institute Inc., Tokyo 100-0004 (JP)
(72) Inventor: SAWAMURA, Kentaro, Bussan Nanotech Res. Inst. Inc., Tokyo 1000004 (JP)
(74) Representative: HOFFMANN EITLE
(86) International application number: PCT/JP2005/012411
(87) International publication number: WO 2006/035536

(57) **Abstract**

(Subject) The aim is to provide a tube end connector which connects a first tubular member and a second tubular member while securing sealing performance.

(Solving Means) The tube end connector according to the present invention is provided with a band spring 4b which covers both outer surface of an end portion of a zeolite membrane covered ceramic tube 1 and outer surface of an end portion of a metal tube 5 in conditions of connecting the end portion of the zeolite membrane covered ceramic tube 1 and the end portion of the metal tube 5; and a fluorine elastomer 3b which is placed at the region between the band spring 4b and the outer surfaces both of the zeolite membrane covered ceramic tube 1 and the metal tube 5, and which has elasticity.

## Description

### Technical Field

This invention relates to a tube end connector, and particularly, this invention relates to a tube end connector which connects a first tubular member and a second tubular member while securing sealing performance, or a tube end connector which connects a tubular member and a sealing member while securing sealing performance.

### Background Art

Zeolites are crystalline aluminosilicates which embrace pores of the order of molecular sizes , and membranes made up of zeolites are widely used as molecular sieves because of their property of selectively allowing molecules to pass through themselves depending on the molecular size or shape. It is known that a good energy efficiency can be attained when the zeolite membrane is used for separation between water and organic solvent in a mixed liquid thereof.

Since zeolite membrane does not have sufficient mechanical strength in itself, the zeolite membrane is generally formed on a surface of a porous ceramic tube. When assembling such a zeolite membrane-covered ceramic tube into a module, it is often that a metal tube is connected to an end of the ceramic tube. It is because the assembling the ceramic tube into the module becomes easy by virtue of such a construction.

The conventional way of connecting the zeolite membrane-covered ceramic tube and the metal tube will be explained.
First, a zeolite membrane-covered ceramic tube, and a metal tube having an outer diameter which is about the same with that of the ceramic tube are provided. A thermally shrinkable tube of which inner diameter is slightly larger than the outer diameter of the metal tube is also provided.

Next, to one end of the thermally shrinkable tube, an end of the zeolite membrane-covered ceramic tube is inserted, and to another end of the thermally shrinkable tube, an end of the metal tube is inserted. Then, by heating the thermally shrinkable tube, the thermally shrinkable tube is allowed to shrink in the direction of decreasing the inner diameter thereof in order to connect the zeolite membrane-covered ceramic tube and the metal tube (See, Patent literature 1).

Patent literature 1 : JP 8-131782 A (The 8th paragraph)

### Disclosure of Invention

### Problem to be Solved by the Invention

Incidentally, the above mentioned thermal shrinkable tube has disadvantages that it is hard and lacks elasticity. Generally, both the surface of the metal tube and the surface of the zeolite membrane covered ceramic tube do not show mirror surfaces. Namely, they have less smoothness, and they are in uneven surface conditions at microscopic observations. Further, since the outer shape of the zeolite membrane-covered ceramic tube shows out of round and there are variation among the respective products of zeolite membrane-covered ceramic tube, a perfect correspondence between the outer diameter of the ceramic tube and that of the metal tube can be hardly expected. Therefore, by means of the thermal shrinkable tube of less elasticity, it is impossible to secure an ample sealing performance at the connecting position between the zeolite membrane-covered ceramic tube and metal tube.

Further, the coefficient of linear expansion for the thermally shrinkable tube is 100×10⁻⁶/°C ( the coefficient of linear expansion for plastics; 30 - 130×10-6/°C ), the coefficient of linear expansion for the metal tube (SUS304) is 17×10⁻⁶/°C (the coefficient of linear expansion for metals; 4 - 30×10-6/°C), and the coefficient of linear expansion for alumina ceramic tube is 8×10⁻⁶/°C ( the coefficient of linear expansion for ceramics; 1 - 10×10⁻⁶/°C). Thus, the thermally shrinkable tubes, the metal tubes and the ceramic tubes mutually differs greatly in the coefficient of linear expansion. Therefore, it is caused that the connection part between the metal tube and the ceramic tube is covered with the heat shrinkable tube which has an incredibly large coefficient of linear expansion. Thus, there is apossibility that a gap between the metal tube or the ceramic tube and the thermal shrinkable tube is produced by temperature fluctuations. As a result, a fear of making the bad sealing performance worse will arises.

The present invention is contributed in consideration of such a situation mentioned above, and a purpose thereof is to provide a tube end connector which connects a first tubular member and a second tubular member while securing sealing performance. Further, another purpose of the present invention is to provide a tube end connector which connects a tubular member and a sealing member while securing sealing performance.

### Means for Solving the Problems

In order to solve the above mentioned problems, the tube end connector according to the present invention is characterized in that it contains a covering member which covers both outer surface of an end portion of a first tubular member and outer surface of an end portion of a second tubular member in conditions of connecting the end portion of the first tubular member and the end portion of the second tubular member, and a member which is placed at the region between the covering member and the outer surfaces both of the first tubular member and the second tubular member, and which has elasticity or fluidity.

According to the tube end connector, since the member which is placed at the region between the covering member and both of the first tubular member and the second tubular member possesses elasticity or fluidity, it is possible to ensure an adequate sealing performance at the connecting portion of the first tubular member and the second tubular member, even when the first tubular member and the second tubular member have respective surfaces in uneven condition at microscopic observations.

Also, in the tube end connector according to the present invention, it is preferable that the coefficient of linear expansion for the member mentioned above is larger than those of the covering member, first tubular member and the second tubular member. By means of this fact, it is possible to repress the gap creation between the covering member and both of the first tubular member and the second tubular member, even when the tube end connector is used under conditions of fluctuating the temperature. Therefore, the sealing performance can be secured even under the environment of fluctuating the temperature. In detail, assuming that the linear expansion coefficient of the member having elasticity or fluidity is the smallest as compared with the respective linear expansion coefficients of the covering member, the first tubular member, and the second tubular member, upon temperature increasing, the degree of the thermal expansion of the member is the smallest as compared with those of the covering member, the first tubular member, and the second tubular member. As a result, a gap comes to appear between the covering member and both of the first tubular member and the second tubular member, because the thermal expansion of the member can not follow the thermal expansion of the covering member. This gap becomes a cause of destroying the sealing performance. To the contrary, when the degree of the thermal expansion of the member is set to be large as compared with those of the covering member, the first tubular member, and the second tubular member, the thermal expansion of the member is greater than the thermal expansion of the covering member. Thus, it is possible to sustain constantly the condition of closely contact between the covering member and the member.
Moreover, because the above mentioned member has elasticity or fluidity, the member can be also allowed to expand thermally in the direction of the above mentioned tubular members as a moiety of not expanding in the direction of presenting the covering member, and thus, it is possible to sustain constantly the condition of closely contact between the member and the tubular members. Thereby, the closely contact can be sustained.

The tube end connector according to the present invention is characterized in that it contains a covering member which covers both outer surface of an end portion of a first tubular member and outer surface of an end portion of a second tubular member in conditions of connecting the end portion of the first tubular member and the end portion of the second tubular member;
a first member which is placed at the region between the covering member and the outer surface of the first tubular member, and which has elasticity or fluidity;
a second member which is placed at the region between the covering member and the outer surface of the second tubular member, and which has elasticity or fluidity; and
grease which is placed at the region between the first member and the second member, and which is located over the respective outer surfaces of the first tubular member and the second tubular member.

Also, in the tube end connector according to the present invention, it is preferable that the respective linear expansion coefficients of the first member and the second member are larger than those of the covering member, the first tubular member and the second tubular member.

Further, in the tube end connector according to the present invention, it is possible that the first tubular member is a ceramic type filter element, and the second tubular member is a metal tube.

Alternatively, in the tube end connector according to the present invention, it is also possible that the second tubular member is replaced with an approximately circular cylindrical member.

According to this tube end connector, since the member which is placed at the region between the covering member and both of the first tubular member and the approximately circular cylindrical member, or the first member and the second member, possess elasticity or fluidity, it is possible to ensure an adequate sealing performance at the connecting portion of the first tubular member and the approximately circular cylindrical member, even when the first tubular member and the approximately circular cylindrical member have respective surfaces in uneven condition at microscopic observations.

The tube end connector according to the present invention is characterized in that it contains a sealing member which covers outer surface of an end portion of a tubular member and seals the end portion of the tubular member, and
a member which is placed at the region between the sealing member and the outer surface of the tubular member, and which has elasticity or fluidity.
Incidentally, it is desirable that the above mentioned sealing member has a cap structure.

Also, in the tube end connector according to the present invention, it is preferable that the coefficient of linear expansion for the member mentioned above is larger than those of the tubular member and the sealing member.

Further, in the tube end connector according to the present invention, it is possible that the tubular member is a ceramic type filter element, and the sealing member is made of a metal.

Further, in the tube end connectors according to the present invention, it is preferable that the above mentioned member, or the above mentioned first member and the above mentioned second member, possess resistance to organic solvents, resistance to heat of 100 °C or more, and sealing property.

Further, in the tube end connectors according to the present invention, it is preferable that the above mentioned member, or the above mentioned first member and the above mentioned second member, are composed mutually independently of a easily deformable material such as grease, gel, elastic body, etc., more particularly, composed of a fluorine elastomer or fluorine grease.

Further, in the tube end connectors according to the present invention, it is preferable that the above mentioned covering member bears a force capable of contracting toward the inside of the covering member. Thereby, more sufficient sealing performance can be secured.

Further, in the tube end connectors according to the present invention, it is preferable that the above mentioned covering member is composed of a band spring or a thermally shrinkable tube.
Further more, it is desirable that the thermally shrinkable tube is a fluorine type thermally shrinkable tube.

### Effect of the Invention

As described above, in accordance with the present invention, it is possible to provide a tube end connector which connects a first tubular member and a second tubular member while securing sealing performance. Further, in accordance with another aspect of the present invention, it is possible to provide a tube end connector which connects a tubular member and a sealing member while securing sealing performance.

### Embodiments for Carrying out the Invention

Hereinafter, some embodiments of the present invention will be described with referring to the drawings.

### (Embodiment 1)

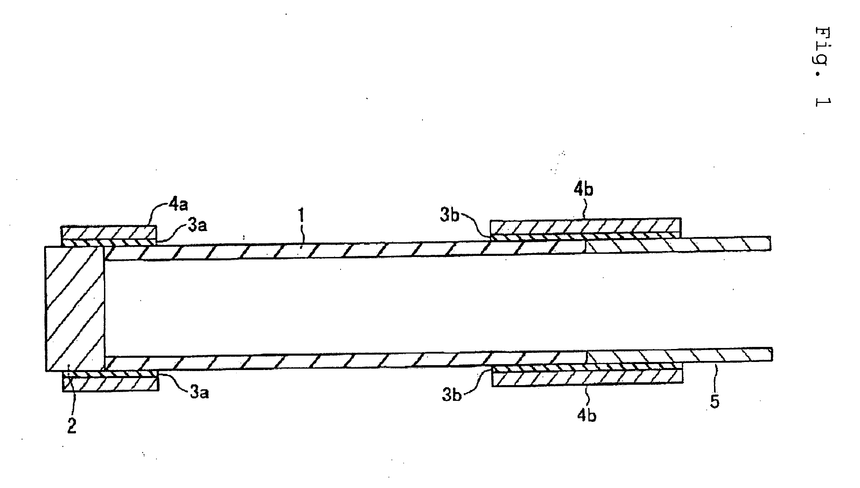

Fig. 1 is a sectional view of showing a state that a zeolite membrane covered ceramic tube is connected with a metal tube and with an approximately circular cylindrical member by means of individual tube end connectors according to Embodiment 1 of the present invention.

An A-type zeolite membrane is formed on the surface of a ceramic supporting tube which is made of alumina and has 12 mm in outside diameter, 8.5 mm in inside diameter, and 500 mm in length. Thereby, the zeolite membrane covered ceramic tube 1 where the zeolite membrane is applied on the ceramic tube is prepared. The zeolite membrane covered ceramic tube 1 is a filter element where the zeolite membrane is formed on the surface of the porous supporting tube.

Next, to one endof the zeolitemembrane-coveredceramic tube 1, an approximately circular cylindrical member which is made of SUS304 and has 12 mm in outside diameter, and 20 mm in length is connected so as to make an mutual agreement of these axes. Fluorine elastomer (e.g., SIFEL8070 manufactured by Shinetsu Chemistry) 3a is coated to the both sides of this connecting part, each being at about 10 mm in width. Namely, the fluorine elastomer 3a is coated to the outer surface of the approximately circular cylindrical member 2 within 10 mm from the connecting end of the cylindrical member 2, and the outer surface of the zeolite membrane-covered ceramic tube 1 within 10 mm from one end (the connecting end) of the ceramic tube 1, respectively. The applied amount of the fluorine elastomer 3a for this coating is 0.1 g.

Next, a band spring 4a which has 20 mm in width, and 0.1 mm in thickness, and which shows 11 mm of inner diameter and duplex in the winding number under the natural condition is provided. The band spring 4a is expanded once, and then the band spring 4a is placed around the fluorine elastomer 3a which was coated on the respective one ends of the approximately circular cylindrical member 2 and the zeolite membrane-covered ceramic tube 1 so as to wrap the fluorine elastomer 3a. Since the inner diameter of the band spring 4a is smaller than the respective outer diameters of the approximately circular cylindrical member 2 and the zeolite membrane-covered ceramic tube 1, a force which can tighten the fluorine elastomer 3a, the approximately circular cylindrical member 2 and the zeolite membrane-covered ceramic tube 1 inwardly is produced by contracting the band spring 4a. Thereby, the approximately circular cylindrical member 2 and the zeolite membrane-covered ceramic tube 1 can be fixed by the band spring 4a via fluorine elastomer 3a. The thickness of the fluorine elastomer 3a in this situation will come to about 0.07 mm when converting from the applied amount of the fluorine elastomer.

Next, the band spring 4a and the fluorine elastomer 3a is subjected to heat treatment at the 150 °C for 1 hour. Thereby, the fluorine elastomer 3a which were in fluid is solidified and it comes to an elastic body, and the one end of the zeolite membrane-covered ceramic tube is sealed with the approximately circular cylindrical member 2. Incidentally, since the band spring 4a consists of SUS304 which was heat treated at the 400 °C, it is usable at a temperature of not more than 400 °C. In other words, even if the band spring is subj ected to heat treatment at the 150 °C, the characteristic of the band spring does not change.

Next, to another end of the zeolite membrane-covered ceramic tube 1, an end of a metal tube which is made of SUS304 and has 12 mm in outside diameter, and 8.5 mm in inside diameter and 500 mm in length is connected so as to make an mutual agreement of these axes. Fluorine elastomer(e.g., SIFEL8070 manufactured by Shinetsu Chemistry) 3b is coated to the both sides of this connecting part, each being at about 20 mm in width. Namely, the fluorine elastomer 3b is coated to the outer surface of the metal tube 5 within 20 mm from the connecting end of the metal tube 5, and the outer surface of the zeolite membrane-covered ceramic tube 1 within 20 mm from the other end of the ceramic tube 1, respectively. The applied amount of the fluorine elastomer 3b for this coating is 0.2 g.

Next, a band spring 4b which has 40 mm in width, and 0.1 mm in thickness, and which shows 11 mm of inner diameter and duplex in the winding number under the natural condition is provided. The band spring 4b is expanded once, and then the band spring 4b is placed around the fluorine elastomer 3b which was coated on the one end of the metal tube 5 and the other end of the zeolite membrane-covered ceramic tube 1 so as to wrap the fluorine elastomer 3b. Since the inner diameter of the band spring 4b is smaller than the respective outer diameters of the metal tube 5 and the zeolite membrane-covered ceramic tube 1, a force which can tighten the fluorine elastomer 3a, the metal tube 5 and the zeolite membrane-covered ceramic tube 1 inwardly is produced by contracting the band spring 4a. Thereby, the metal tube 5 and the zeolite membrane-covered ceramic tube 1 can be fixed by the band spring 4b via fluorine elastomer 3b. The thickness of the fluorine elastomer 3b in this situation will come to about 0.07 mm when converting from the applied amount of the fluorine elastomer.

Next, the band spring 4b and the fluorine elastomer 3b are subjected to heat treatment at the 150 °C for 1 hour. Thereby, the fluorine elastomer 3b which were in fluid is solidified and it comes to a elastic body.

In this way, the one end of the zeolite membrane-covered ceramic tube is connected to the approximately circular cylindrical member 2 by means of the tube end connector, and thereby, the one end of the zeolite membrane-covered ceramic tube is sealed. In addition, the other end of the zeolite membrane-covered ceramic tube is connected to the metal tube 5 by means of the tube end connector while obtaining a good sealing performance.

The above mentioned tube end connectors include the band springs 4a, 4b and the fluorine elastomer 3a, 3b which are arranged inside the springs. By applying the inwardly contracting force of the band springs 4a, 4b to the fluorine elastomer 3a, 3b, the connection between the ceramic tube 1 and the approximately circular cylindrical member 2 and the connection between the ceramic tube 1 and the metal tube 5 can be attained while securing sealing performance.

In accordance with above Embodiment 1, even when the zeolite membrane-covered ceramic tube 1, the metal tube 5 and the approximately circular cylindrical member 2 have respective surfaces in uneven condition at microscopic observations, even when the outer shape of the ceramic tube 1 shows out of round and there are variation among the respective products of ceramic tube 1, and thus a perfect correspondence between the outer diameter of the ceramic tube 1 and that of the metal tube. 5 or the approximately circular cylindrical member 2 can be hardly expected, by means of the contracting force of the band spring and the elastic force of the fluorine elastomer, the ample sealing performance can be ensured at the connecting parts of the ceramic tube 1 to the metal tube 5 and the approximately circular cylindrical member 2 individually.

Further, the coefficient of linear expansion for the fluorine elastomer is 300×10⁻⁶/°C, the coefficient of linear expansion for the metal tube, the approximately circular cylindrical member 2, and the band spring which each are made of SUS304 is 17×10⁻⁶/°C, and the coefficient of linear expansion for alumina ceramic tube is 8×10⁻⁶/°C. The coefficient of linear expansion for the fluorine elastomer is the largest as compared with those of the metal tube 5, the approximately circular cylindrical member, the band spring and the ceramic tube 1. Accordingly, a construction where the fluorine elastomer which shows the largest coefficient of linear expansion is sandwiched between the band spring and one of the metal tube 5, the ceramic tube 1 and the approximately circular cylindrical member 2 is provided. Therefore, even when the metal tube 5 and the approximately circular cylindrical member 2 as well as the ceramic tube, which are connected mutually by the tube end connector, are used under an environment where temperature is varied, it is possible to repress the gap formation between the band spring and one of the metal tube 5, the ceramic tube 1 and the approximately circular cylindrical member 2. Thereby, it is possible to ensure the sealing performance even under the environment of temperature fluctuations.

Further, in the case that the fluorine elastomer happens to thermal-expand greatly in the course of temperature rising and it squeeze out from a space between the band spring and one of the metal tube 5, the ceramic tube 1 and the approximately circular cylindrical member 2, and the fluorine elastomer squeezed out does not return inside the band spring even after the temperature goes down to the room temperature, the portion squeezed out of the band spring is only the thermal expanded portion of the fluorine elastomer. In addition, the band spring has the contracting force and the fluorine elastomer has the elastic force. Therefore, the sealing performance can be sufficiently secured in the connection parts of ceramic tube 1 to the metal tubes 5 and the approximately circular cylindrical member 2 individually. Accordingly, the tube end connector according to this embodiment enjoys a heatproof cycle property (for example, a heatproof cycle property against the temperature fluctuation between the room temperature and 130 °C).

Also, because the heat resistance temperature of the fluorine elastomer 3a, 3 b is 200 °C, the tube end connector according to this embodiment enjoys heat resistance of up to 200 °C. Also, the fluorine elastomer possesses resistance to organic solvents.

Next, since the examination to confirm the sealing performance of the tube end connector according to this Embodiment was performed, the procedure of the examination and the result of the examination will be illustrated.

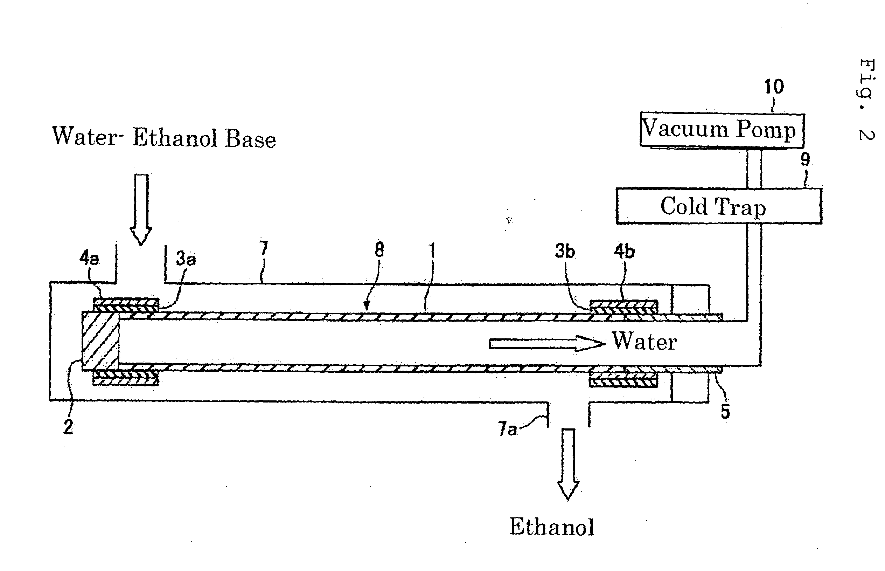

Fig. 2 is a schematic constitutional view of the pervaporation (PV) testing apparatus. This testing apparatus is equipped with a vacuum line with a cold trap.

The testing apparatus includes a container 7 into which water-ethanol base feed liquid (the mass ratio of ethanol/water = 90/10) is fed. In the inside of the container 7, a separator 8 is installed. This separator 8 is prepared by sealing one end of a zeolite membrane covered ceramic tube 1 with an approximately circular cylindrical member 2 by means of a tube end connector 2 and connecting another end of the zeolite membrane covered ceramic tube 1 to the top end of a metal tube 5. The zeolite membrane covered ceramic tube 1 functions as filter element.

The tail end of the metal tube 5 is connected to the vacuum line with a cold trap. Namely, the tail end of the metal tube is connected to a vacuum pump 10 via a liquid nitrogen trap (cold trap) 9. Further, an exhaust port 7a which discharges ethanol which is separated from the water-ethanol base feed liquid is provided for the above mentioned container 7.

A feed liquid (the mass ratio of ethanol/water = 90/10) at 75°C was fed to the container 7 of the testing apparatus, and suction was applied to the inside of the separator 8 with the vacuum pump 10. The vacuum degree on this occasion was 10 to 1000 Pa. The liquid which permeated the separator 8 was trapped with the liquid nitrogen trap 9. The composition of trapped material in the liquid nitrogen trap 9 were measured every 10 minutes by using a gas chromatograph (GC-14B manufactured by Shimadzu Corporation). According to the result of this measurement, the trapped material consisted of a mixture of water and ethanol, and the ethanol concentration in the mixture was constantly to be not more than 0.01%. Therefore, as for the part which connects one end of the zeolite membrane covered ceramic tube 1 with the approximately circular cylindrical member 2, and the part which connects another end of the zeolite membrane covered ceramic tube 1 with the metal tube, by means of the individual tube end connectors, it can be confirmed that the sealing performance was adequately ensured.

In addition, the volume swelling percentage of the fluorine elastomer 3a, 3b under the condition of being into contact with the solvent ( e.g., water - ethanol base ) at the above mentioned using temperature of 75 °C is not more than 10 %.

### (Embodiment 2)

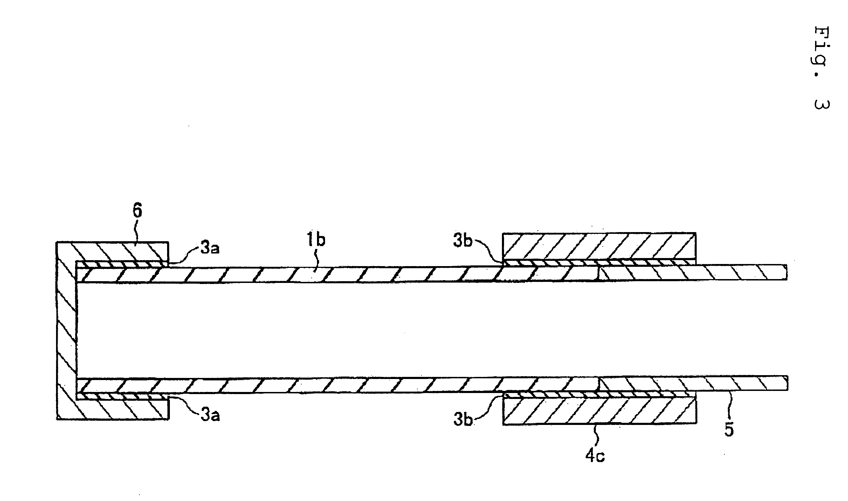

Fig. 3 is a sectional view of showing a state that a zeolite membrane covered mullite tube is connected with a metal tube and with a metal cap by means of individual tube end connectors according to Embodiment 2 of the present invention. The zeolite membrane covered mullite tube is a filter element.

To the outside surface of the zeolite membrane covered mullite tube 1b in the region of one end thereof to 20 mm in distance from the end, fluorine elastomer (e.g., SIFEL604 manufactured by Shinetsu Chemistry) 3a is coated. Then, a cap 6 which is made of SUS and has 12.3 mm in inside diameter and 12.7 mm in outside diameter is put to the one end of the zeolite membrane covered mullite tube 1b Thereby, between the cap 6 and the zeolite membrane covered mullite tube 1b, the fluorine elastomer is filled up.

Next, the cap 6 and the fluorine elastomer 3a is subjected to heat treatment at the 150 °C for 1 hour. Thereby, the fluorine elastomer 3a which were in fluid is solidified and it comes to an elastic body, and the one end of the zeolite membrane-covered mullite tube 1b is sealed with the cap 6.

Next, to another end of the zeolite membrane-covered mullite tube 1b, an end of a metal tube which is made of SUS304 and has 12 mm in outside diameter and 9 mm in inside diameter is connected so as to make an mutual agreement of these axes. Fluorine elastomer (e.g., SIFEL 604 manufactured by Shinetsu Chemistry) 3b is coated to the both sides of this connecting part, each being at about 20 mm in width. Namely, the fluorine elastomer 3b is coated to the outer surface of the metal tube 5 within 20 mm from the connecting end of the metal tube 5, and the outer surface of the zeolite membrane-covered mullite tube 1b within 20 mm from the other end of the mullite tube 1b, respectively. Then, onto the surface of the fluorine elastomer 3b, a PTFE sheet (not shown in Figure) of 0.1 mm in thickness and 40 mm in width is wound doubly.

Next, a band spring 4c which has 40 mm in width, and 0.1 mm in thickness, and which shows 11 mm of inner diameter and single in the winding number under the natural condition is provided. The band spring 4c is expanded once, and then the band spring 4c is placed around one end of the metal tube 5 and the other end of the zeolite membrane-covered ceramic tube 1 so as to wrap the fluorine elastomer 3b and the PTFE sheet. Since the inner diameter of the band spring 4c is smaller than the respective outer diameters of the metal tube 5 and the zeolite membrane-covered mullite tube 1b, a force which can tighten the fluorine elastomer 3a, the PTFE sheet, the metal tube 5 and the zeolite membrane-covered mullite tube 1b inwardly is produced by contracting the band spring 4c. Thereby, the metal tube 5 and the zeolite membrane-covered mullite tube 1 can be fixed by the band spring 4c via fluorine elastomer 3b and PTFE sheet.

Next, the band spring 4c is subjected to heat treatment at the 150 °C for 1 hour. Thereby, the fluorine elastomer 3b which were in fluid is solidified and it comes to a elastic body.

In this way, the one end of the zeolite membrane-covered mullite tube 1b is sealed by the cap 6, and the other end of the zeolite membrane-covered mullite tube 1b is connected to the metal tube 5 by means of the tube end connector while obtaining a good sealing performance.

The above mentioned tube end connector includes the band spring 4c, and the PTFE sheet and the fluorine elastomer 3b which are arranged inside the spring. By applying the inwardly contracting force of the band spring 4c to the fluorine elastomer 3b, the connection between the mullite tube 1b and the metal tube 5 can be attained while securing sealing performance.

In addition, the one end of the zeolitemembrane-covered mullite tube 1b can be connected while the sealing performance is sufficiently secured by the fluorine elastomer which is placed between the mullite tube 1b and the cap 6.

The same effects as those of in Embodiment 1 can be expected in Embodiment 2.
That is, the sealing performance can be sufficiently secured about both end portions of the zeolite membrane-covered mullite tube 1b. Further, because the coefficient of linear expansion for the fluorine elastomer is the largest as compared with those of the metal tube 5, the cap 6, the band spring and the mullite tube 1b, it is possible to ensure the sealing performance even when it is used under the environment of temperature fluctuations. Also, the tube end connector enjoys a heatproof cycle property. In addition, the fluorine elastomer possesses the heat resistance and the resistance to organic solvents.

The examination to confirm the sealing performance of the tube end connector according to this Embodiment was performed. Since the procedure of this examination is same with that in Embodiment 1, the explanation thereof is omitted here. According to the results of the examination, the trapped material consisted of a mixture of water and ethanol, and the ethanol concentration in the mixture was constantly to be not more than 0.01%. Therefore, it can be confirmed that the sealing performance was adequately ensured as is the case with Embodiment 1.

### (Embodiment 3)

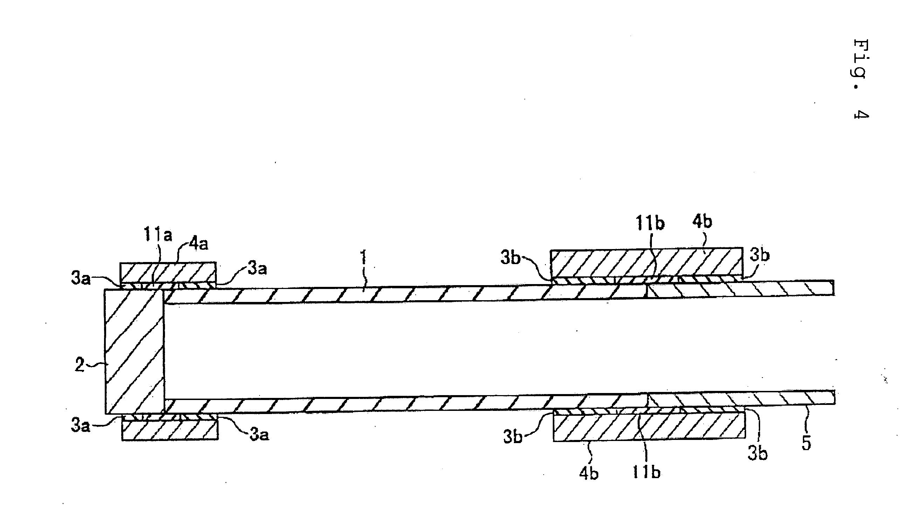

Fig. 4 is a sectional view of showing a state that a zeolite membrane covered ceramic tube is connected with a metal tube and with an approximately circular cylindrical member by means of individual tube end connectors according to Embodiment 3 of the present invention, wherein the same parts as shown in Fig. 1 are represented by the same numerals as shown in Fig. 1, and hereinafter, only the deferent points will be explained.

Silicone type high vacuum grease 11a is applied to the outer surface of the approximately circular cylindrical member 2 at the region of being not more than 5 mm from the connecting end of the cylindrical member 2, and also to the outer surface of the zeolite membrane-covered ceramic tube 1 at the region of being not more than 5 mm from one end (connecting end) of the ceramic tube 1. Fluorine elastomer 3a is applied to the outer surface of the approximately circular cylindrical member 2 at the region of being not more than 5 mm from the end of the silicone type high vacuum grease 11a located on the approximately circular cylindrical member 2, and also to the outer surface of the zeolite membrane-covered ceramic tube 1 at the region of being not more than 5 mm from the other end of the silicone type high vacuum grease 11a located on the ceramic tube 1 .

Silicone type high vacuum grease 11b is applied to the outer surface of the metal tube 5 at the region of being not more than 10 mm from one end of the metal tube, and also to the outer surface of the zeolite membrane-covered ceramic tube 1 at the region of being not more than 10 mm from another end of the ceramic tube. Fluorine elastomer 3b is applied to the outer surface of the metal tube at the region of being not more than 10 mm from the end of the silicone type high vacuum grease 11a located on the metal tube 5, and also to the outer surface of the zeolite membrane-covered ceramic tube 1 at the region of being not more than 10 mm from the other end of the silicone type high vacuum grease 11a located on the ceramic tube 1.
Incidentally, it is same as Embodiment 1 except the above mentioned points.

The same effects as those of in Embodiment 1 can be also expected in Embodiment 3.
That is, by virtue of the contracting force of the band spring and the elastic force of the fluorine elastomer as in Embodiment 1, as well as the fluidity of the silicone type high vacuum grease, the sealing performance can be sufficiently secured with respect to the connecting portions of the ceramic tube 1 to the metal tube 5 and the approximately circular cylindrical member 2 individually.

The coefficient of linear expansion for the silicon type high vacuum grease is 240×10⁻⁶ / °C. Therefore, the linear expansion coefficient of the fluorine elastomer and that of the silicon type high vacuum grease are large as compared with those of the metal tube 5, the approximately circular cylindrical member, the band spring and the ceramic tube 1. Thus, even when it is used under an environment where temperature is varied, it is possible to repress the gap formation between the band spring and one of the metal tube 5, the ceramic tube 1 and the approximately circular cylindrical member 2. Thereby, it is possible to ensure the sealing performance even under the environment of temperature fluctuations.

Further, the tube end connector according to this Embodiment enjoys a heatproof cycle property. In addition, because the heat resistant temperature of silicone type high vacuum grease is 200 °C, the tube end connector according to this Embodiment shows heat resistance of up to 200 °C. Also, the fluorine elastomer possesses the resistance to organic solvents.

The examination to confirm the sealing performance of the tube end connector according to this Embodiment was performed. Since the procedure of this examination is same with that in Embodiment 1, the explanation thereof is omitted here. According to the results of the examination, the trapped material consisted of a mixture of water and ethanol, and the ethanol concentration in the mixture was constantly to be not more than 0.04%. Therefore, it can be confirmed that the sealing performance was adequately ensured as is the case with Embodiment 1.

Because the fluorine elastomer is located so as to surround the silicone type high vacuum grease 11a, 11b, only the fluorine elastomer can come into contact with the solvent such as ethanol, and the silicone type high vacuum grease does not come into contact with the solvent. Accordingly, it is not necessarily required that the silicone type high vacuum grease possesses the resistance to organic solvents. In addition, since the usage amount of the fluorine elastomer can be decreased as compared with the case of Embodiment 1, it is possible to attain some cost reduction. Incidentally, silicone type high vacuum grease is inexpensive as compared with the fluorine elastomer.

### (Embodiment 4)

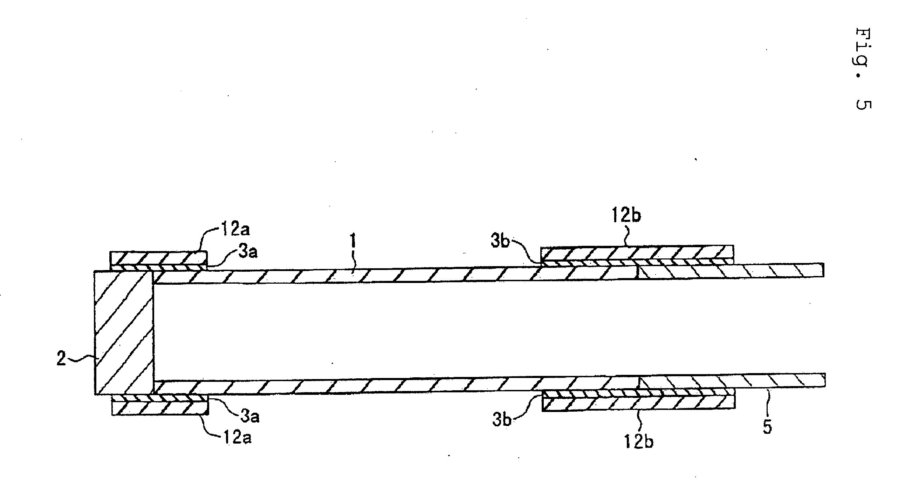

Fig. 5 is a sectional view of showing a state that a zeolite membrane covered ceramic tube is connected with a metal tube and with an approximately circular cylindrical member by means of individual tube end connectors according to Embodiment 4 of the present invention, wherein the same parts as shown in Fig. 1 are represented by the same numerals as shown in Fig. 1, and hereinafter, only the deferent points will be explained.

FEP thermally shrinkable tubes 12a, 12b manufactured by Junkosha Inc. are used in lieu of the band springs used in Embodiment 1. The thermally shrinkable tubes have 13 mm in inner diameter and 40mm in length before shrinkage. Besides, as the fluorine elastomer 3a, 3b, the SIFEL 611 manufactured by Shinetsu Chemistry is used, for instance.

Hot winds are applied to the thermally shrinkable tube 12a from the all directions around this uniformly by using heat guns. Thereby, the thermally shrinkable tube 12a is allowed to shrink inwardly, and the fluorine elastomer 3a which were in fluid is solidified and it comes to a elastic body, and the one end of the zeolite membrane-covered ceramic tube 1 is sealed with the approximately circular cylindrical member.

Hot winds are applied to the thermally shrinkable tube 12b from the all directions around this uniformly by using heat guns. Thereby, the thermally shrinkable tube 12b is allowed to shrink inwardly, and the fluorine elastomer 3b which were in fluid is solidified and it comes to a elastic body.

The tube end connectors according to this Embodiment include the thermally shrinkable tubes 12a, 12b and the fluorine elastomer 3a, 3b which are arranged inside the thermally shrinkable tubes. By applying the inwardly shrinking force of the thermally shrinkable tubes 12a, 12b to the fluorine elastomer 3a, 3b, the connection between the ceramic tube 1 and the approximately circular cylindrical member 2 and the connection between the ceramic tube 1 and the metal tube 5 can be attained while securing sealing performance.

The same effects as those of in Embodiment 1 can be also expected in Embodiment 4.

The examination to confirm the sealing performance of the tube end connector according to this Embodiment was performed. Since the procedure of this examination is same with that in Embodiment 1, the explanation thereof is omitted here. According to the results of the examination, the trapped material consisted of a mixture of water and ethanol, and the ethanol concentration in the mixture was constantly to be not more than 0.1%. Therefore, it can be confirmed that the sealing performance was adequately ensured as is the case with Embodiment 1.

### (Control)

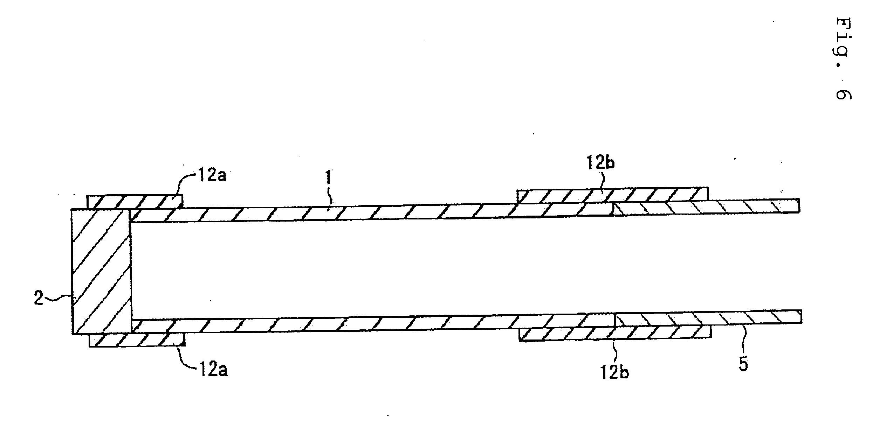

Fig. 6 is a sectional view of showing a state that a zeolite membrane covered ceramic tube is connected with a metal tube and with an approximately circular cylindrical member by means of individual tube end connectors according to Control against to Embodiment 4.

The difference is that the usage of the fluorine elastomer is omitted. That is, the fluorine elastomer is not provided between each of the thermally shrinkable tubes and each of the approximately circular cylindrical members 2, the zeolite membrane-covered ceramic tubes 1 and the metal tube 5.

The examination to confirm the sealing performance of the tube end connector according to this Control was performed. The procedure of this examination is same with that in Embodiment 1. According to the results of the examination, a large amount of ethanol was entered into the vacuum line and thus it was not entrapped completely by the cold trap. As a result of analyzing the material entered into the vacuum line, it was shown that ethanol was 72. 8 % and water was 27.2 %. Therefore, it was confirmed that the sealing was not accomplished at all in contrast to Embodiment 4.

### (Embodiment 5)

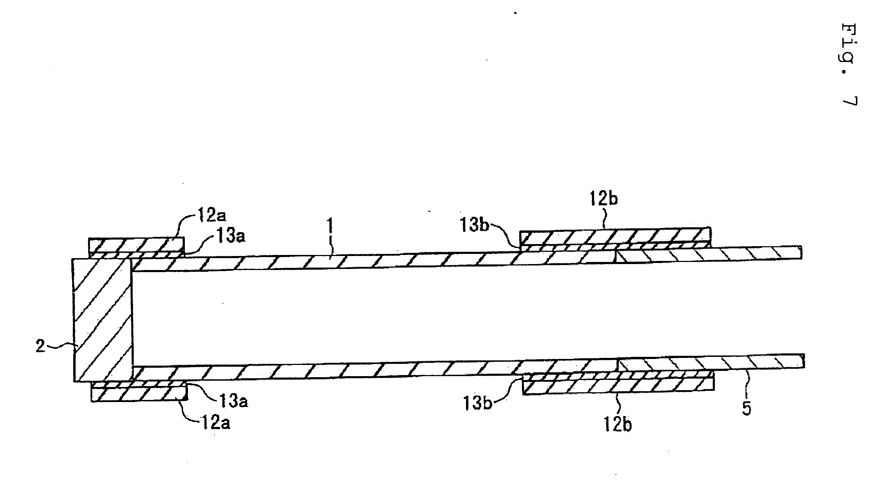

Fig. 7 is a sectional view of showing a state that a zeolite membrane covered ceramic tube is connected with a metal tube and with an approximately circular cylindrical member by means of individual tube end connectors according to Embodiment 5 of the present invention, wherein the same parts as shown in Fig. 5 are represented by the same numerals as shown in Fig. 5, and hereinafter, only the deferent points will be explained.

Fluorine grease 13a, 13b are used in lieu of the fluorine elastomer used in Embodiment 1. This fluorine grease is prepared by mixing fine powder of tetrafluoroethylene resin (PTFE) into perfluoro polyether liquid (PFPE) so as to obtain a greasy state.

The same effects as those of in Embodiment 4 can be also expected in Embodiment 5.
That is, by virtue of the shrinking force of the thermally shrinkable tubes 12a, 12b and the fluidity of the fluorine grease 13a, 13b, the sealing performance can be sufficiently secured with respect to the connecting portions of the ceramic tube 1 to the metal tube 5 and the approximately circular cylindrical member 2 individually. Further, the fluorine grease possesses the heat resistance and the resistance to organic solvents.

. The examination to confirm the sealing performance of the tube end connector according to this Embodiment was performed. The procedure of this examination is same with that in Embodiment 1. According to the results of the examination, the trapped material consisted of a mixture of water and ethanol, and the ethanol concentration in the mixture was constantly to be not more than 0.5%. Therefore, it can be confirmed that the sealing performance was adequately ensured as is the case with Embodiment 4.

Incidentally, the present invention is not limited to the above mentioned embodiments, and, without deviating from the spirit of the present invention, various variations and modifications can be made on carrying out the present invention.

### Brief Description of the Drawings

[Fig. 1] It is a sectional view of showing a state that a zeolite membrane covered ceramic tube is connected with a metal tube and with an approximately circular cylindrical member by means of individual tube end connectors according to Embodiment 1 of the present invention.
[Fig. 2] It is a schematic constitutional view of the pervaporation (PV) testing apparatus.
[Fig. 3] It is a sectional view of showing a state that a zeolite membrane covered mullite tube is connected with a metal tube and with a metal cap by means of individual tube end connectors according to Embodiment 2 of the present invention.
[Fig. 4] It is a sectional view of showing a state that a zeolite membrane covered ceramic tube is connected with a metal tube and with an approximately circular cylindrical member by means of individual tube end connectors according to Embodiment 3 of the present invention.
[Fig. 5] It is a sectional view of showing a state that a zeolite membrane covered ceramic tube is connected with a metal tube and with an approximately circular cylindrical member by means of individual tube end connectors according to Embodiment 4 of the present invention.
[Fig. 6] It is a sectional view of showing a state that a zeolite membrane covered ceramic tube.is connected with a metal tube and with an approximately circular cylindrical member by means of individual tube end connectors according to Control against to Embodiment 4.
[Fig. 7] It is a sectional view of showing a state that a zeolite membrane covered ceramic tube is connected with a metal tube and with an approximately circular cylindrical member by means of individual tube end connectors according to Embodiment 5 of the present invention.

### Explanation of numerals

1 Zeolite membrane covered ceramic tube
1b Zeolite membrane covered mullite tube
2 Circular cylindrical member
3a, 3b Fluorine elastomer
4a, 4b, 4c Band spring
5Metal tube
6 Cap made of SUS
7 Container
8 Separator
9 Liquid nitrogen trap (Cold trap)
10 Vacuum pump
11a, 11b Silicone type high vacuum grease
12a, 12b FEP thermal shurinkable tube
13a, 13b Fluorine grease

## Claims

1. Tube end connector which comprises:
a covering member which covers both outer surface of an end portion of a first tubular member and outer surface of an end portion of a second tubular member in conditions of connecting the end portion of the first tubular member and the end portion of the second tubular member, and
a member which is placed at the region between the covering member and the outer surfaces both of the first tubular member and the second tubular member, and which has elasticity or fluidity.

2. Tube end connector according to Claim 1, wherein the coefficient of linear expansion for said member is larger than those of the covering member, the first tubular member and the second tubular member.

3. Tube end connector which comprises:
a covering member which covers both outer surface of an end portion of a first tubular member and outer surface of an end portion of a second tubular member in conditions of connecting the end portion of the first tubular member and the end portion of the second tubular member;
a first member which is placed at the region between the covering member and the outer surface of the first tubular member, and which has elasticity or fluidity;
a second member which is placed at the region between the covering member and the outer surface of the second tubular member, and which has elasticity or fluidity; and
grease which is placed at the region between the first member and the second member, and which is located over the respective outer surfaces of the first tubular member and the second tubular member.

4. Tube end connector according to Claim 3, wherein the respective linear expansion coefficients of said first member and said second member are larger than those of the covering member, the first tubular member and the second tubular member .

5. Tube end connector which comprises:
a sealing member which covers outer surface of an end portion of a tubular member and seals the end portion of the tubular member, and
a member which is placed at the region between the sealing member and the outer surface of the tubular member, and which has elasticity or fluidity.

6. Tube end connector according to Claim 5, wherein the linear expansion coefficients of said member is larger than those of the tubular member and the sealing member.

7. Tube end connector according to any one of Claims 1 - 4, wherein the first tubular member is a ceramic type filter element, and the second tubular member is a metal tube.

8. Tube end connector according to any one of Claims 1 - 4, and 7, wherein the second tubular member is replaced with an approximately circular cylindrical member.

9. Tube end connector according to Claim 5 or 6, wherein the tubular member is a ceramic type filter element, and the sealing member comprises metal.

10. Tube end connector according to any one of Claims 1, 2, 5, and 6, wherein saidmemberpossesses resistance to organic solvents, resistance to heat of 100 °C or more, and sealing property.

11. Tube end connector according to any one of Claims 1, 2, 5, 6, and 10, wherein said member comprises a fluorine elastomer or fluorine grease.

12. Tube end connector according to Claim 3 or 4, wherein each of said first member and said second member possess resistance to organic solvents, resistance to heat of 100 °C or more, and sealing property.

13. Tube end connector according to any one of Claims 3, 4, and 12, wherein said first member and said second member mutually independently comprise a fluorine elastomer or fluorine grease.

14. Tube end connector according to any one of Claims 1 - 13, wherein the covering member bears a force capable of contracting toward the inside of the covering member.

15. Tube end connector according to any one of Claims 1 - 14, wherein the covering member is composed of a band spring or a thermally shrinkable tube.

16. Tube end connector according to Claim 15, wherein the thermally shrinkable tube is a fluorine type thermally shrinkable tube.
